# EUROPEAN PATENT SPECIFICATION

(11) **EP 2 958 022 B1**
(45) Date of publication and mention of the grant of the patent: **01.02.2017**
(21) Application number: 15175307.6
(22) Date of filing: 24.04.2013
(51) Int. Cl.: G06F 11/07, G06F 11/16, G06F 11/18

(54) **INHERENT FAIL SAFE ENABLING CONTROL AND COMMAND UNIT WITH TWO OUT OF TWO ARCHITECTURE**
INHÄRENTE AUSFALLSICHERE EINHEIT ZUR STEUERUNGS- UND BEFEHLSAKTIVIERUNG MIT 2-AUS-2-ARCHITEKTUR
UNITÉ DE CONTRÔLE ET DE COMMANDE À ACTIVATION DE SÉCURITÉ INTÉGRÉE INHÉRENTE AVEC UNE ARCHITECTURE DEUX SUR DEUX

(43) Date of publication of application: 23.12.2015
(62) Divisional of application: 13165107.7
(73) Proprietor: ALSTOM Transport Technologies, 93400 Saint-Ouen (FR)
(72) Inventor: Bachetti, Vittorio, 40026 Imola (BO) (IT); Motta, Sara, 40050 Monte San Pietro (BO) (IT); Campedelli, Francesco, 40068 S. Lazzaro di Savena (BO) (IT)
(74) Representative: Karaghiosoff, Giorgio Alessandro

(56) References cited:
- EP-A2- 2 533 154
- US-A- 4 400 792
- US-A- 5 794 167
- US-A1- 2012 173 054

## Description

Inherent fail safe enabling control and command unit with two out of two architecture according to the preamble of the appended claim 1.

In US5274554 a control system includes a dual actuator (2) and primary and secondary controllers (20, 22), each of which has two control channels. In a normal mode of operation, the primary controller (20) controls both valves (32, 38) of the actuator (2). Each primary channel generates a model signal and a monitoring signal corresponding to expected and actual operation of the actuator, respectively. The two signals from each channel are communicated to the other channel. Each channel monitors itself as well as the other channel by comparing model and monitoring signals; and is also similarly redundantly monitored by the other channel of the controller (20). Each channel independently compares its own signals with the signals from the other channel. Each of the two channels has a deactivating switch responsive to a fault status signal from either of the two channels to thereby allow deactivation of a failed channel even when the failure in such channel prevents it from deactivating itself. The channels of the secondary controller (22) are similarly redundantly monitored by themselves and each other. Communication links are maintained between the primary channels, the secondary channels, and between the primary and secondary channels.

Document US5794167 discloses a microprocessor based safety system applicable, in particular, to the field of rail transport, for monitoring and controlling actuators (ACT) as a function of the data supplied by sensors (CP), characterized in that it includes at least two microprocessors (P1, P2) in parallel handling the same application, the inputs of which receive the pre-encoded data (DE) from the sensors (CP), and the output data of which is read back in safety for comparison with the input data, and a third comparison microprocessor (P3) known as a voter, for comparing, using software and in safety, the encoded characteristic results (R1 R2) of the two application microprocessors (P1, P2) and operating in consequence a dynamic controller (CD) authorizing the transmission of the output data (DS) to the actuators (ACT).

In the above cited documents the combination of two channel command and control logic unit and the voting unit leads to a voting process for generating vital enable signals which is not inherent fail safe relating to failures of the voter unit and which does not provide for distinguishing transient incongruence between the two parallel output signals of the two processing channels of the logic processing unit from stable differences which are caused by a fault condition which must lead to disabling the vital enable signal.

The documents US2012/173054 and US4400792 disclose fail-safe redundant multi-channel processing systems having a two-out-of-two architecture, wherein output result comparison is used to detect processing faults. The document EP2533154 discloses a fail-safe redundant multi-channel processing system having a two-out-of-two architecture, wherein both internal states and outputs of the redundant processing circuits are compared to detect processing errors.

The present invention, which is defined in detail in the appended independent claim 1, aims to provide for a inherent fail safe enabling control and command unit with two out of two architecture which overcomes the above disclosed disadvantages of the currently known prior art units.

A further object of the present invention relates to a inherent fail safe enabling control and command unit having a multiple voter unit architecture which are connected in cascade connection the preceding voter unit enabling in a vital way the following voter unit in the cascade connection sequence.

According to a first aspect of the present invention the above mentioned aims are achieved by an inherent fail safe enabling control and command unit according to the appended independent claim 1.

According to an embodiment, the voter unit is activated by the logic processing unit by means of a voter power unit, the voter unit being provided with a feedback signal generator driven by the voter power signal which feedback signals are fed to a feedback signal analyzer of the logic processing unit for detecting the status of the voter unit and disabling the voter unit in case the status signal is compliant with a fault status of the voter unit and/or to a driving input of the signal comparator of the voter unit forcing the signal comparator to disable the vital enable signal.

According to a further aspect of the present invention, the voter unit has counter and timer means for measuring the frequency of the incongruence events in the comparison of the two output signals and timer means for disabling the vital enable signal only for a predetermined and limited time period when the incongruence events are one isolated event or the frequency of the said incongruence is lower than a certain threshold.

In a preferred embodiment the output signals are digital signals and the signal comparator of the voter unit carries out a bit by bit comparison of the said two output signals counting the number of non congruent or non complementary and synchronous bits in the two signals for a certain time period and/or the rate of non congruent bits or non complementary and synchronous bits relatively to the total number of bits compared, and each of the said non congruence events drives the voter unit to suppress the enable signal reversibly only for a certain period of time or irreversibly in a permanent way depending on the number of non congruent bits or non complementary and synchronous in a certain period of time and/or in the rate of non congruent bits or non complementary and synchronous bits relatively to the total number of bits compared or to the number of congruent bits or complementary and synchronous.

According to still another aspect of the present invention, the voter unit is activated by initialisation means consisting in a voter power unit driven by the logic processing unit to generate a voter power signal and by a initialisation phase comprising an energy storing step in which the logic processing unit generates and feeds to a starter signal generator section of the voter unit for a certain time period two square wave signals which drive the said starter signal generator section to generate a charging signal fed to a storage capacity and which phase is triggered by the feedback status signals of the voter unit fed to the logic processing unit, the said energy storage phase being carried out for a certain limited time corresponding to the capacity charging time and the said storage capacity feeding a driving of a timer circuit (140) together with the signal comparator unit (120) for enabling or disabling of the vital output of the voter unit (1) as long as a certain amount of charge is provided in the storage capacity.

Still according to another feature an activation condition maintenance signal is provided to the voter unit for maintaining the said voter unit in an active operative status supplying the vital enable signal which activation condition maintenance signal is the vital enable signal generated by the voter and fed back to the voter unit for driving the signal comparison unit.

According to a preferred embodiment the signal comparator unit is a exclusive OR circuit carrying out the bitwise comparison of the two digital or digitalized output signals of the logic processing unit and feeding an input of a timer circuit being an AND circuit with four inputs the said AND circuit generating a driving signal enabling the vital signal output of the voter unit, when at each the four inputs the following signals are respectively present with a certain predetermined voltage value about a predetermined minimum voltage threshold:
a voter power signal generated by the voter power supply
a voter feedback signal of the driving signal of the vital enable signal output;
a vital enable feedback signal when the voter is in an operative status and the vital output is enabled or a signal generated by the starter unit during the energy storage phase is loading a storage capacity connected to an RC circuit and to one of the said four inputs of the AND circuit;
the output signal of the signal comparator unit; whereas in case of a detection of non congruent or non complementary and synchronous bits in the two output signals being compared, the output signal of the comparator unit falls below the minimum voltage threshold;
the vital enable feedback signal falls to zero since the vital output of the voter is disabled and the capacitor begins to discharge with a time constant defined by the RC circuit, this time constant determining the time during which the voltage supplied to one of the input of the AND circuits remains above the minimum voltage threshold and the disabling status of the voter unit is reversible, and the time after which the disabling status of the voter unit becomes permanent if the comparison of the signals continues to reveal non congruent or non complementary and synchronous bits, the voltage generated by the storage capacity falling below the minimum voltage threshold.

Further improvements of the invention are subject matter of the dependent claims.

The invention and the advantages deriving from it are disclosed with more detail in the following description by means of the enclosed figures in which:
Figure 1 shows a block diagram of a inherent fail safe control and command unit according to the invention.
Figure 2 is a diagram showing the different signals and their time relation which are generated during the power on, initialisation, energy storage, vital enable by energy storage and vital enable stationary operative condition.

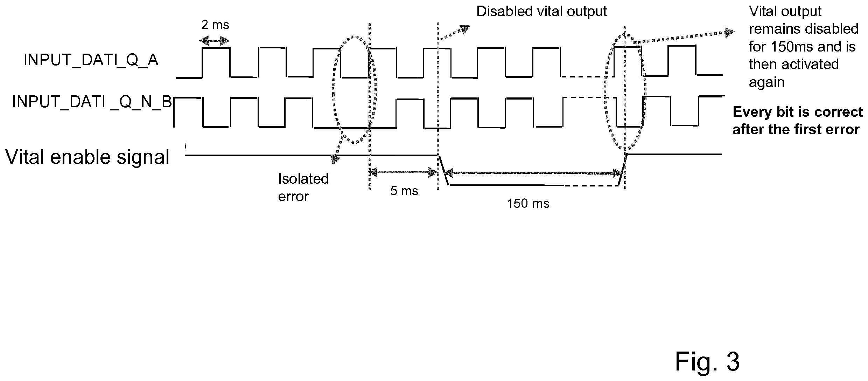

Figure 3 shows a diagram of the two digital output signals of the two processing channels of the command and control logic processing unit in which an isolated single non congruent bit is present.
Figure 4 is a block diagram showing three voting units in cascade connection.
Figure 5 is a diagram showing the disabling time table in a multi voter architecture of figure 4 in case of non congruent signals.
Figure 6 is a functional block diagram of the architecture of the voter core.
Figures 7 to 10 are the functional block diagrams of each of the units of figure 6 and respectively of the input circuit, the exclusive or circuit, the starter circuit, the timing circuit and the output circuit.

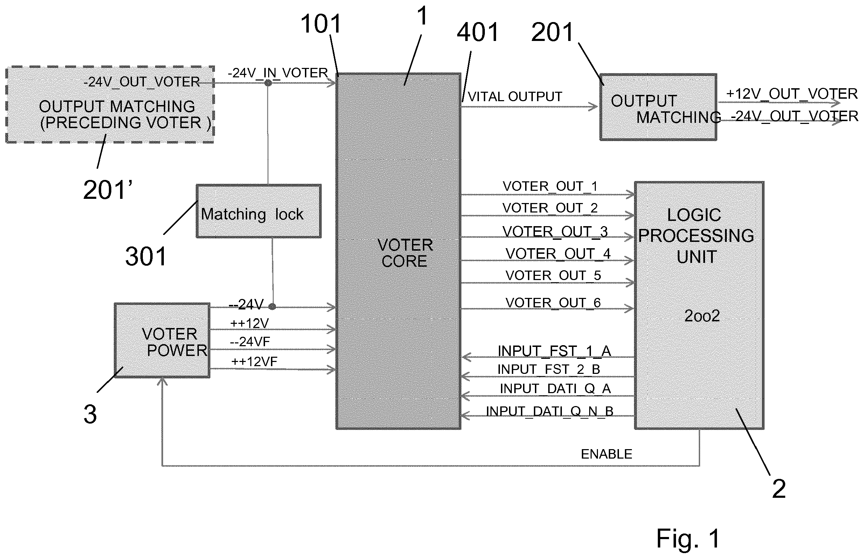

According to figure 1, the inherent fail safe control and command unit comprises a voter unit (voter core) 1 having the task of generating a vital enable signal at the vital output 401 when certain operative conditions are met. These conditions consist in the congruence of the output signals INPUT_DATI_Q_A and INPUT_DATI_Q_N_B on two parallel data channels each of which is fed by a processing channel of a logic processing unit 2 having a two out of two (2oo2) architecture by comparing predefined sequences of bits (pattern). The Voter unit 1 habilitates the actuating circuits of the system to which it is applied by an output signal indicated as VITAL OUTPUT at 401 which is generated only if the data on the output of the two processing channels are at any time complementary or congruent and synchronous.

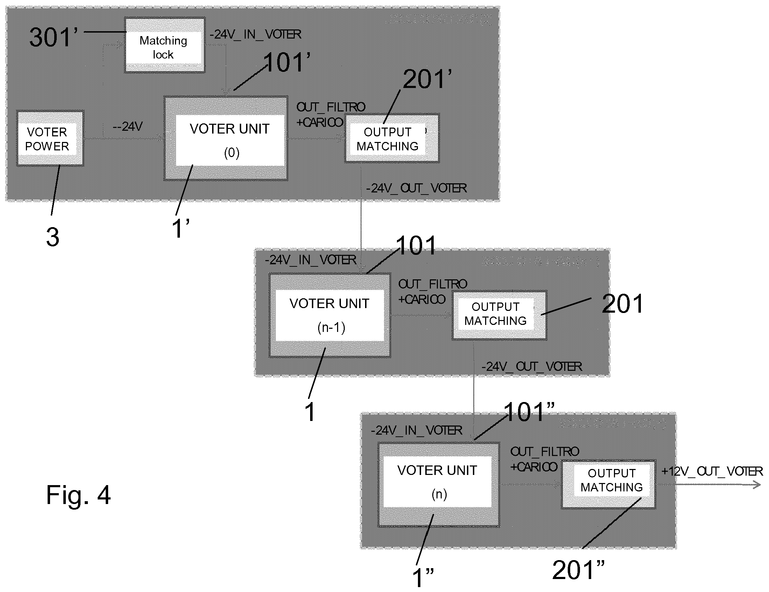

As it will appear more clearly in the following description of a multi-voter architecture (figure 4), at one input 101 of the voter unit 1 there is provided an output matching unit 201' which is of a preceding voter unit 1'. The output matching unit 201 of the voter unit 1 at the output 401 of the enabling signal is connected either to the input 101" of a further voter unit 1" or to an actuator not shown in figure 4.

When no preceding voter unit 1' is provided than the matching locking unit 301 is provided connecting the power output -24v to the input 101.

According to the multiple voter configuration figure 4 shows an example limited to three voter units 1', 1 and 1".

The voter units 1', 1 and 1" are in a cascade connection in which the output of the voter unit 1' for the vital enabling signal drives the following voter unit 1 and the output of this voter unit 1 drive the voter unit 1", while the output of voter unit 1" can be connected to which ever operative unit or to a further voter unit.

The multiple voter configuration is useful when there are systems with an hardware distributed on several boards, the multiple voter unit architecture allows to disable every output on every board even if a fault is discovered in one board only by a first voter unit on this one board.

According to a functional aspect of the example of figure 1, the functional features of the inherent fail safe control and command unit provide that the voter unit 1 is able to generate the vital enable signal once a starting phase is correctly terminated.

The starting phase comprises the following steps:
Power ON, Initialisation, Energy storage, vital enabling with energy storage, vital enabling in a steady operational state.

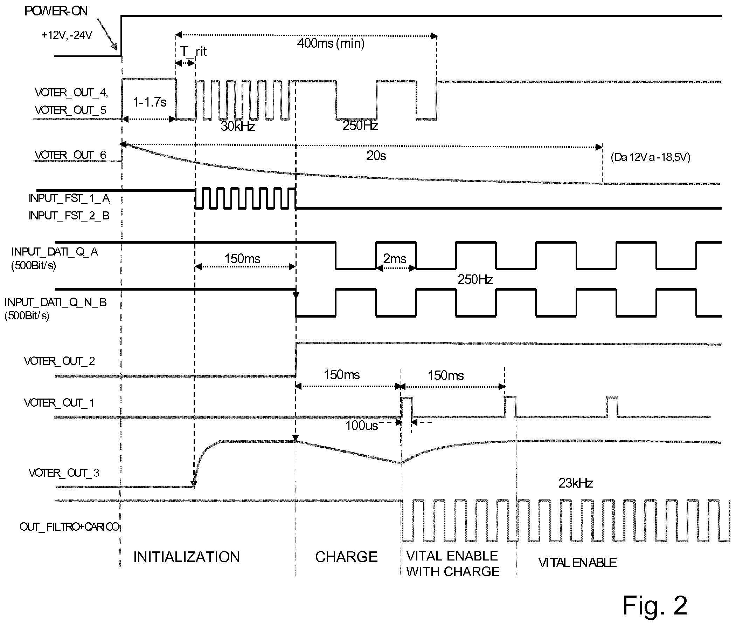

Figure 2 shows the signals generated during the different steps and exchanged by the voter unit 1 and the logic processing unit 2.

During the power on step power signals are fed to the voter unit 1 by the voter power unit 3 which is driven by the logic processing unit 2 (signals-24V, ++12V, --24VF, ++12Vf)

In the initialisation step after 1 to 1,7 seconds from power on signal the voter unit 1 modifies the signals VOTER_OUT_4 and VOTER_OUT_5 in such a way as to show a trailing edge and after the which, with a maximum delay T_rit equal to 5ms, the logic processing unit 2 generates the signals INPUT_FST_1_A and INPUT_FST_2_B. These two signals have a predetermined frequency (for example 30kHz) and are fed to the voter core for a certain predetermined time period (150ms).

The energy storage step provides the charging of a storage capacity in the voter unit 1 (non illustrated in detail). This step is carried out by the logic processing unit 2 after the initialisation step and consists in the feeding for a certain predetermined time period (for example 180ms) of the signals INPUT_DATI_Q_A and INPUT_DATI_Q_N_B, which is the inverted signal of INPUT_DATI_Q_A and which signals are completely synchronous. During the energy storage step the output 401 of the voter unit 1 for the vital enable signal is kept disabled.

After the energy storage step the voter unit 1 enables the vital output 301 if the bit by bit comparison of the signals INPUT_DATI_Q_A and INPUT_DATI_Q_N_B has shown continuously a congruence of the said signals.

After a certain predetermined further time period (for example 180ms) from the enabling of the vital output 401, the voter unit 1 enters in a steady operative state.

When a first couple of non congruent (out of phase with a certain phase shift for example of maximum 1ms) or complementary bits is detected as shown in figure in the signals INPUT_DATI_Q_A and INPUT_DATI_Q_N_B, the voter core enters a reversible fault status. This means that the vital signal output is disabled and kept disabled only for a limited predetermined time period for example for a time period of about 150ms ±20%. After the said limited period of time has expired the voter unit 1 enables again the vital signal output 201.

A permanent or irreversible status of the disabling of the vital signal output 201 is entered if a fault condition occurs in a certain time period from the end of the generation of the initialisation signals INPUT_FST_1_A and INPUT_FST_2_B (typically for example from 100ms to 150ms after end of generation of the signals INPUT_FST_1_A and INPUT_FST_2_B). In this case the voter unit 1 has to be restarted.

The permanent disabling status of the vital signal output 201 can be reached when the number of faulty bits is able to bring the energy of the voter unit at a threshold level below which the fault condition become irreversible. So that the voter unit cannot become again active by itself anymore and has to be restarted. The irreversible fault condition depends also from the repetition frequency of the faulty bits in relation to the non faulty or to the total number of bits.

A further safety condition is provided according to which a reversible disabling status is entered by the voter unit 1 if it receives consecutively on the same input INPUT_DATI_Q_A or INPUT_DATI_Q_N_B a number of bits exceeding 35 bits of the same kind (zero or one) even if these bits are complementary and synchronous with the one of the output signals of the other channel.

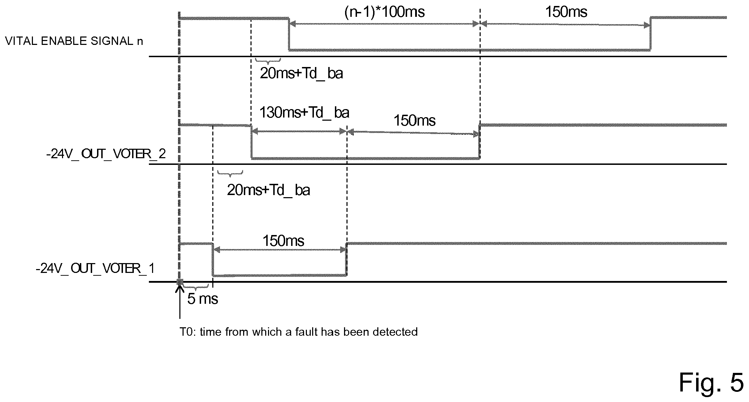

Considering a multiple voter configuration according to figure 4, the delays for disabling of the single voter units 1', 1,and 1" are shown in the diagram of figure 5.

The diagrams of figure 5 are examples calculated by the equations obtained defining the following variables:
t_{delay}= the delay time between the fault detection and the disabling of the vital output 201, 201', 201" of the voter unit 1, 1', 1",
t_{off}= the time needed for disabling the vital output; n= the identification number of the voter unit 1, 1', 1" in the cascade connection;
Td_ba= the delay time of the disabling of the-24V_OUT_VOTER of the matching lock
And setting the following time delays as reported in the following table

| time | First Voter | Second Voter | Nth Voter |
|---|---|---|---|
| tdelay | 5ms | 5ms+20ms+Td_ba | 5ms+((n-1)*20ms+ Td_ba) |
| toff | 150ms | (130ms - Td_ba)+150ms | ((n-1)* (130ms - Td_ba))+150ms |

As it appears from the above, every voter unit 1 following the first one accumulates a delay in detecting the fault which is 20ms+Td_ba and which is introduced by the voter unit itself and by the matching block 201 of each preceding voter unit.

Each voter unit following the first one accumulates a delay of 130 ms-Td_ba in relation of the recovery of the -24V_out_VOTER vital output 201 adding to its own delay in disabling its own vital output.

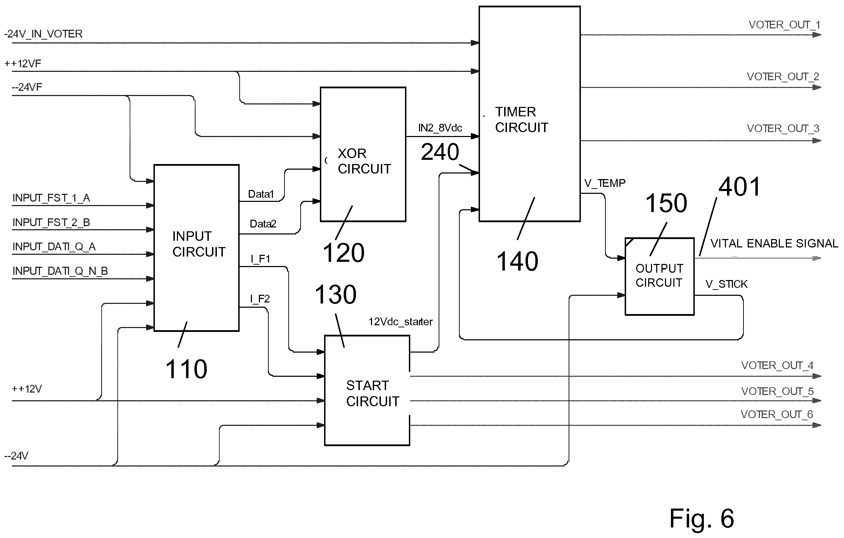

Figures 6 to 10 are block diagrams showing a more detailed example of configuration of the voter unit according to the present invention

Each voter unit 1 comprises an input circuit 110, and exclusive or circuit 120, a start circuit 130 a timer circuit 140 and an output circuit 150.
A first level of detail of the architecture is shown in figure 1. A logic processing unit 2 with two processing channels is provided executing in a completely independent way and in parallel the same processing program on same input data and generating two output signals INPUT_DATI_Q_A and INPUT_DATI_Q_N_B to a voter unit 1. According to a further level of detail illustrated in figure 6, the voter unit 1 comprises a signal comparator which in the present example is in the form of a XOR circuit 120. The said signal comparator has the task of determining the congruence of the two output signals INPUT_DATI_Q_A and INPUT_DATI_Q_N_B. According to figure 6, the voter unit 1 further comprises a signal generator which in fig. 6 is formed by a timer circuit 140 and an output circuit 150 and has the task of generating a vital enable signal at the output 401 only as long as the two signals INPUT_DATI_Q_A and INPUT_DATI_Q_N_B are congruent.

As it will appear more clearly from the following description, the said voter unit 1 further comprises a status signal generator 130 of status signals VOTER_OUT_4 and VOTER_OUT_5 of the voter. The said signals are fed to a processing unit which in the present example is the logic processing unit 2 and which generates a driving signal ENABLE (fig. 1) of voter power module 3. The said driving signals forces the power mdule 3 to generate a power signal-24V, ++12V, --24VF, ++12VF of the voter as long as the status signals VOTER_OUT_4 and VOTER_OUT_5 corresponds to a non faulty status of the voter.

The input circuit 110 has the function of feeding the signals 1_F1 and 1_F2 of a certain frequency (for example 30kHz) to the starting circuit 130 upon receipt of the signals INPUT_FST_1_A and INPUT_FST_2_B from the logic processing unit 2. Furthermore it has the function of filtering out the high frequencies and carrying out a reshaping of the signals to be compared INPUT_DATI_Q_A and INPUT_DATI_Q_N_B, in order to prepare these signals to be fed to the exclusive or circuit 120.

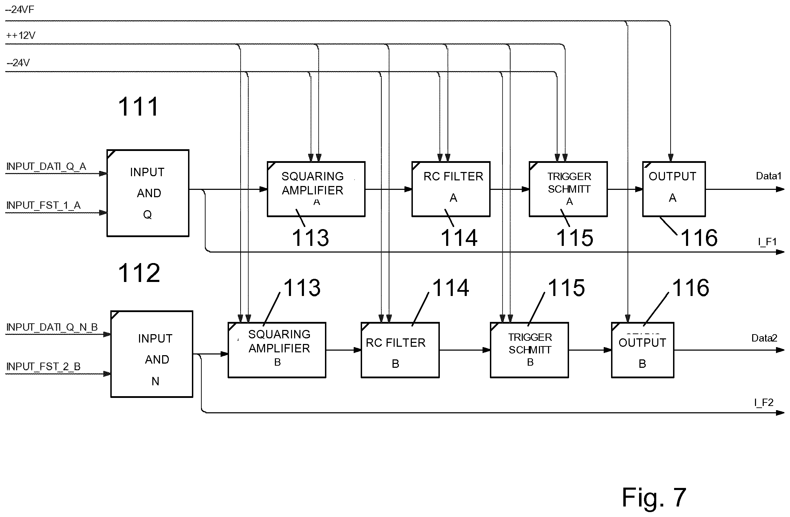

The input circuit is shown in more detail in figure 7. The circuit has two sections which are indicated by A and B. The logic processing unit 2 feeds to the input circuit the INPUT_FST_1_A and INPUT_FST_2_B and the INPUT_DATI_Q_A and INPUT_DATI_Q_N_B. These signals are firstly interlaced in the Input AND blocks 111 and 112 generating the signals 1_F1 and 1_F2. These signals are used during the initialisation step by the starter circuit 130 for generating the starter signals 12Vdc-Starter and by the exclusive or circuit 120 which carries out the bitwise comparison on the data 1 and data 2 signals obtained by submitting the 1_F1 and 1_F2 signals to amplifying 113, RC filtering 114, Schmidt triggering 115 and amplifying at the output blocks 116.

Interlacing the frequencies of the INPUT_FST_1_A and INPUT_FST_2_B signals with the signals INPUT_DATI_Q_A and INPUT_DATI_Q_N_B has the advantage of obviating to a danger condition according to which it would be possible that a faulty activation of the signals INPUT_FST_1_A and INPUT_FST_2_B could lead to an activation of the exclusive or circuit 120. By this interlacing process any non allowed activation of the signals INPUT_FST_1_A and INPUT_FST_2_B would be added to the data of INPUT_DATI_Q_A and INPUT_DATI_Q_N_B which, being filtered by 114, would not lead to the correct data 1 and data 2 signals.

In the input circuit 110 each of the two channels A and B, after the filtering of the signals in RC filter 114 and their shaping by the Schmidt trigger 115, transforms the analogical signal affected by distortion in a square signal which is then amplified in the output block 116. So the amplified data 1 and data 2 signals are apt to drive the exclusive or circuit 120.

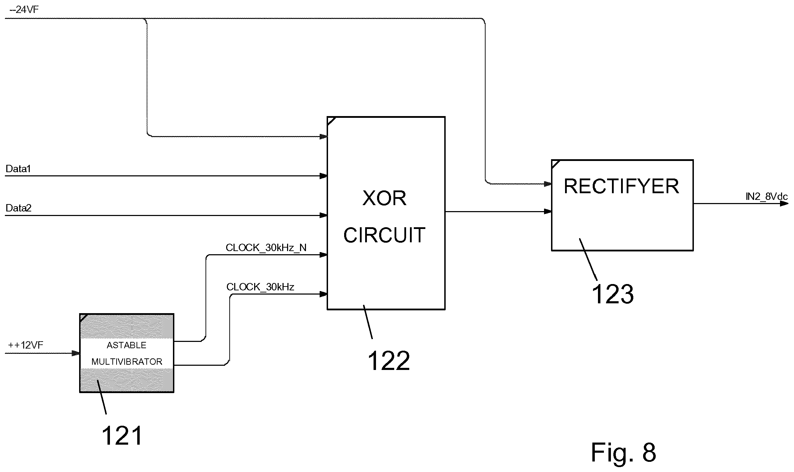

In figure 8 a detailed example of a exclusive OR circuit 120 is shown. The exclusive OR circuit has the function of generating an output signal IN2_8Vdc having a certain predefined tension (for example 8V) which is to be fed to the timer circuit 140 for its activation.

The exclusive OR circuit 120 comprises an astable multivibrator 121 feeding the clock signals (for example 30kHz) to the exclusive OR circuit 122 which carries out the bitwise comparison of the DATA 1 and DATA 2 signals. An output rectifier 123 transforms the output signals of the XOR circuit 122 in a dc signal IN2_8Vdc apt to drive the timer circuit 140.

The XOR logic allows that the output signal of the XOR circuit 122 is a continuous signal at the frequency of the astable multivibrator 121 only if the two input signals Data 1 and Data 2 are complementary. The high frequency signal is rectified and the rectifier 123 generates the dc voltage signal IN2_8Vdc.

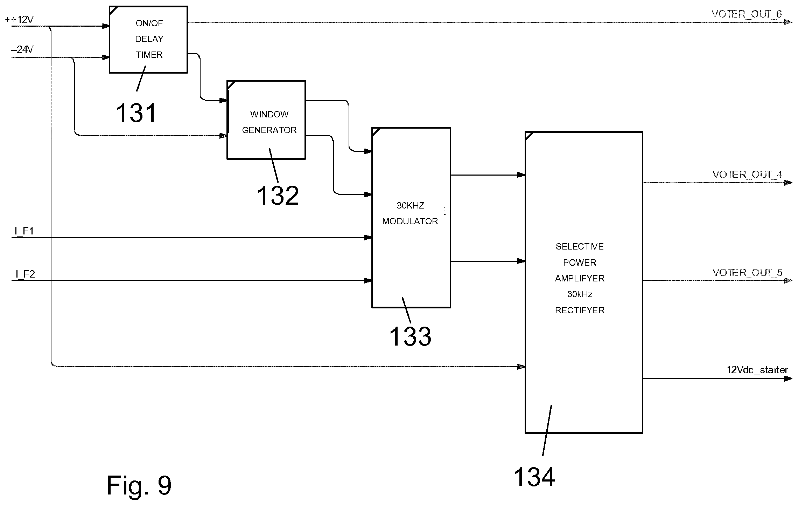

Figure 9 shows an example of a detailed configuration of the starting circuit 130.

This circuit has the function of allowing to restart the voter unit 1 after an irreversible fault only after having disabled the power signals for a certain period of time by means of a delay on/off timer 131. The starting circuit 130 of the voter unit 1 is also responsible for driving low the signals VOTER_OUT_4 and VOTER_OUT_5 fed to the processing unit 2 after the time period of the initialisation of 1 to 1,7 seconds thus enabling the generation of the signals 1_F1 and 1_F2 by means of the logic processing unit 2 feeding the signals INPUT_FST_1_A and INPUT_FST_2_B to the input circuit 110.

These signals 1_F1 and 1_F2 determines the generation of a starter signal 12Vdc_starter for the timer circuit 140 and a diagnostic signal VOTER_OUT_6 which is fed to the processing unit 2.

After the predetermined time interval from power ON of for example 1 to 1,7 seconds the delay on/off timer 131 enables a window generator 132 which generates two pulses of a certain duration (for example 500 ms). These pulses commutate the outputs for the signals VOTER_OUT_4 and VOTER_OUT_5 from high to low. This is carried out by means of a 30kHz modulator 133 to which the two pulses emitted by the window generator 132 are fed together with two further signals I_F1 and I_F2. If and only if the signals 1_F1 and 1_F2 are present at the same time, the 30 kHz modulator 133, which is formed by two vital AND gate, allows the driving of a selective amplifier 134 by two 30kHz square wave signals generated by the 30 kHz modulator 133. These two signals are analogically summed in the selective amplifier 134, in order to generate a 12Vdc voltage which is fed as 12Vdc_starter to the input 240 of the timer circuit 140.

According to the above description, it appears clearly that the start circuit 130 of figure 6 having the structure described in figure 9 has the further function of a generator of status signals VOTER_OUT_4 and VOTER_OUT_5 which are fed to the logic processing unit 2. The logic processing unit 2 comprises signal analyzer of the said status signals. The logic processing unit 2 analyzes the said signals and generates an enable signal (fig. 1) of the voter power unit 3 (fig. 1) if the status signals correspond to a non faulty status.

The signals VOTER_OUT_4 and VOTER_OUT_5 are a sort of feedback signals on initialisation. If these signals fed to the logic processing unit 2 are not generated by the voter unit 1 or have not the correct configuration the starting process of the voter unit is aborted and the voter has to be restarted.

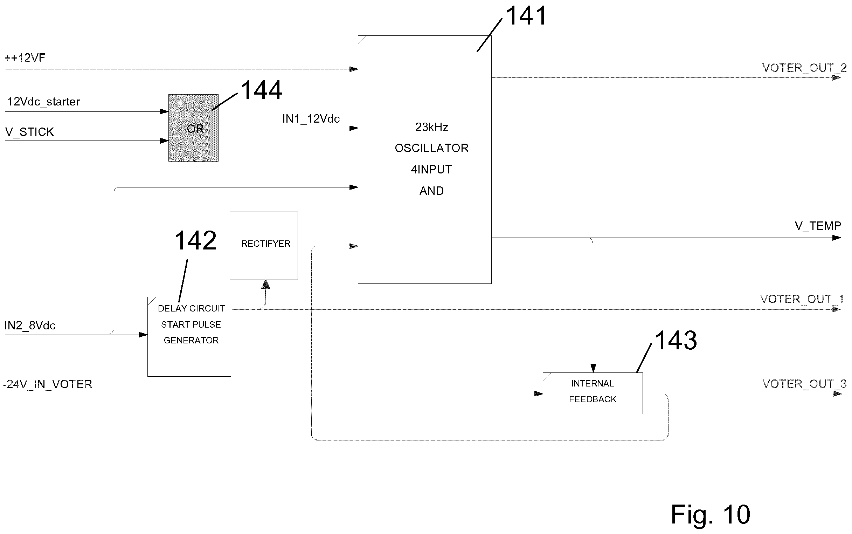

As it will appear more clearly from the following detailed description a further feedback signal will be provided which is responsible for maintaining the voter unit 1 in the steady operative condition after initialisation and which is the vital output signals of the time circuit 140 and more precisely, according to figure 10, of the oscillator 141 which is fed back to the oscillator 141 itself through the internal feedback circuit 143.

The 12Vdc start voltage is reached by charging a capacity (not shown in detail) which is provided in the timer circuit 140. The duration of the start pulses is longer than the time needed to charge the said capacity (typically for example 150ms) and when this last is loaded the energy is sufficient for the timer unit to operate independently from the feeding INPUT_FST_1_A and INPUT_FST_2_B which are not any more generated by the processing unit 2. The processing unit 2 begins to transmit the output data INPUT_DATI_Q_A and INPUT_DATI_Q_N_B. Once the INPUT_FST_1_A and INPUT_FST_2_B are disabled the voltage of the signal at the input 240 of the timer circuit 140 and according to figure 10 at In1-12Vdc input of the oscillator 141, begins to lower down slowly with a time constant determined by an RC circuit (not shown in detail) provided in the timer circuit 140 till the feedback signal V_STICK coming from the output circuit 150, visible in figure 6, is fed to the timer circuit, after the delay generated from the same timer.

According to figure 6, the function of the timer circuit 140 are to enable the vital output 401 only if the XOR circuit 120 transmits a signal with a correct voltage and which is generated only if the bit sequences received with the two data signals DATA1 and DATA2 are complementary and synchronous.

When also only a faulty bit, that means a non congruent or non complementary bit, is detected the output 401 has to remain low for at least a certain predetermined time (for example 150ms) so that the logic processing unit 2 can detect the fault. If the fault persists for an higher number of bits, the voter unit 1 will commutate to a permanent disabled status, and its function can be recovered only by disabling and enabling again the power signals to the voter unit 1.

Figure 10 describes the timer circuit 140 with greater detail. According to figure 10, the timer circuit 140 comprises an oscillator 141 with a certain frequency (for example 23kHz). The oscillator 141 has the function of an AND circuit with four inputs. (++12Vf, IN2_8Vdc, IN1_12Vdc, Voter out_3). In order to generate an output signal V-temp it is necessary that at all the four inputs the voltage is higher than a certain value as for example 6 Volts. If there is a fault condition this condition is not met and the timer circuit 140 will determine the timing for the reversible and irreversible status.

At power on step the input ++12VF is enabled. During initialisation the signal IN1_12Vdc is fed to the oscillator 141 due to the processing of the signals INPUT_FST_1_A and INPUT_FST_2_B provided to the voter unit 1 by the processing unit 2.

In the storage step, the signals IN2_8Vdc grows at once to a certain tension higher than the 6.2 tension value (for example 8 volts) due to the presence of the signals INPUT_DATI_Q_A and INPUT_DATI_Q_N_B and also the circuit generating the delay and a start pulse generator 142 is activated. The tension of the signal IN1_12Vdc begins to discharge, due to the lacking of the signals INPUT_FST_1_A and INPUT_FST_2_B (1_F1 and 1_F2) and according to the time constant of the RC circuit provided in the timer circuit 140 and not shown in detail. After a certain time delay (for example 150ms) from its activation the delay and start the pulse circuit generator 142 generates the VOTER_OUT_1 signal allowing the generation of the V_TEMP Vital signal which in turn maintains active the oscillator 141 through an internal feedback circuit 143. This is the step of vital enabling with energy storage. The internal feedback circuit 143 generates at its output a signal VOTER_OUT_3 which is indeed not sufficient for maintaining active the oscillator 141 but only to trigger its start. When the circuit 150, visible in figure 6, is activated by V_TEMP, it furnishes a signal V_STICK This signal V-STICK is fed to the input of an OR-circuit 144 which second input is fed by the signal 12Vdc-Starter. As long as one of the signals 12Vdc-starter or V-STICK is present at the corresponding input of the OR circuit 144. This circuit generates the IN1-12Vdc which is fed to a corresponding input of the oscillator 141..

When a fault of one bit occurs the tension of the signal IN2_8Vdc falls down to zero while the 12Vdc at IN1_12Vdc begins to lower according to the time constant determined by the already mentioned RC circuit. If the bit sequence restarts correctly and the tension in the IN1_12Vdc signal does not fall below the minimum threshold level of for example 6 Volts, the voter unit enters a reversible fault status and the vital output is disabled only for a certain limited period of time (for example 150ms). On the contrary if other faulty bits occur, the voter unit enters the permanent or irreversible faulty status or disabled status and the voltage at IN1_12Vdc falls down to zero in a permanent way.

The timer circuit 140 generates the following further signals: VOTER_OUT_1 which is the trigger signal of the oscillator 141; VOTER_OUT_2 being the signal proportional to the internal threshold of the inputs of the oscillator 141; VOTER_OUT_3 which is proportional to the power voltage and is caused by the presence of the voltage of the signal IN1_12Vdc-As already disclosed above, the output circuit 150 has the driving function of the output and comprises the output matching stage of the signal to the user.

As it appears clearly from the above the oscillator 141 is a timer means which measure the frequency of the incongruence events This incongruence events are the faults of one bit in the comparison of the two signals INPUT_DATI_Q_A and INPUT DATI_Q_B_N. The vital enable signal at the output 401 of the voter 1 is disabled in a reversible manner, i.e. only for a predetermined limited time period when the incongruence events are one isolated event or when the frequency of the occurrence of the said incongruence is lower than a certain threshold value.

## Claims

1. Inherent fail safe enabling control and command unit for generating a vital enable signal for voting or operating units, the enabling control and command unit having two out of two architecture comprising a logic processing unit (2) with two processing channels executing independently and in parallel the same processing program on same input data and generating two output signals (INPUT_DATI_Q_A and INPUT_DATI_Q_N_B) to a voter unit (1) comprising a signal comparator (120) for determining the congruence of the two output signals and a signal generator (140, 150) for enabling the vital enable signal only as long as the two signals (INPUT_DATA_Q_A and INPUT_DATA_Q_N_B) are congruent **characterised in that**
the voter unit (1) has timer means (140; 141) for measuring the frequency of incongruence events in the comparison of the two output signals and for disabling an enabled vital enable signal only for a predetermined and limited time period when the incongruence events are one isolated event or the frequency of the said incongruence is lower than a certain threshold.

2. Inherent fail safe control and command unit according to claim 1, in which the output signals (INPUT_DATI_Q_A and INPUT_DATI_Q_N_B) are digital signals and the signal comparator (120) of the voter unit carries out a bit by bit comparison of the said two output signals counting the number of non congruent or non complementary and synchronous bits in the two signals for a certain time period and/or the rate of non congruent bits or non complementary and synchronous bits relatively to the total number of bits compared, and each of the said non congruence events drives the voter unit (1) to disable the vital output reversibly only for a certain period of time or irreversibly, in a permanent way, depending on the number of non congruent bits or non complementary and synchronous in a certain period of time and/or in the rate of non congruent bits or non complementary and synchronous bits relatively to the total number of bits compared or to the number of congruent bits or complementary and synchronous.

3. An Inherent fail safe control and command unit according to claim 1 or 2, in which the voter unit (1) is activated by initialisation means consisting in a voter power unit (3) driven by the logic processing unit (2) to generate a voter power signal and by a initialisation phase comprising an energy storing step in which the logic processing unit (2) generates and feeds to a starter signal generator section (130) of the voter unit (1) for a certain time period two square wave signals (INPUT_FST_1_A and INPUT_FST_2_B) which drive the said starter signal generator section (130) to generate a charging signal fed to a storage capacity and which phase is triggered by the feedback status signals (VOTER_OUT_4 and VOTER_OUT_5) of the voter unit (1) fed to the logic processing unit (2), the said energy storage phase being carried out for a certain limited time corresponding to the capacity charging time and the said storage capacity feeding a driving the timer circuit (140) together with the signal comparator unit (120) for enabling or disabling of the vital output of the voter unit (1) as long as a certain amount of charge is provided in the storage capacity.

4. An Inherent fail safe control and command unit according to claims 1 to 3 in which the signal comparator unit is a exclusive OR circuit (130) carrying out the bitwise comparison of the two digital or digitalized output signals (INPUT_DATI_Q_A and INPUT_DATI_Q_N_B) of the logic processing unit (2) and feeding an input of a timer circuit (140) being an AND circuit (141) with four inputs the said AND circuit generating a driving signal (V_TEMP) enabling the vital signal output of the voter unit (1), when at each the four inputs the following signals are respectively present with a certain predetermined voltage value about a predetermined minimum voltage threshold:
a voter power signal generated by the voter power supply (+12VF)
a voter feedback signal of the driving signal of the vital enable signal output (V-TEMP);
a vital enable feedback signal
(V-STICK) when the voter is in an operative status and the vital output is enabled or a signal (12Vdc_starter) generated by the starter unit (130) during the energy storage phase is loading a storage capacity connected to an RC circuit and to one of the said four inputs of the AND circuit (141);
the output signal (IN2_8Vdc) of the signal comparator unit (120);
whereas in case of a detection of non congruent or non complementary and synchronous bits in the two output signals being compared, the output signal of the comparator unit falls below the minimum voltage threshold;
the vital enable feedback signal (V-STICK) falls to zero since the vital output of the voter is disabled and the capacitor begins to discharge with a time constant defined by the RC circuit, this time constant determining the time during which the voltage supplied to one of the input of the AND circuit (141) remains above the minimum voltage threshold and the disabling status of the voter unit (1) is reversible, and the time after which the disabling status of the voter unit (1) becomes permanent if the comparison of the signals (INPUT_DATI_Q_A and INPUT_DATI_Q_N_B) continues to reveal non congruent or non complementary and synchronous bits, the voltage generated by the storage capacity falling below the minimum voltage threshold.

5. An Inherent fail safe control and command unit according to one or more of the preceding claims 1 to 4 in which the said voter unit (1) comprises a voter status signal generator (VOTER_OUT_4 and VOTER_OUT _5) for driving a voter unit power module (3; 130) to generate a power signal of the voter as long as the voter status signal corresponds to a non faulty status.

6. An inherent fail safe control and command unit according to one or more of the preceding claims in which two or more voter units (1', 1, 1") are connected in a cascade connection configuration by connecting the vital enabling output (201', 201) of a preceding voter unit (1'; 1) directly or by means of an output matching unit to the power supply input of a following voter unit (1, 1"), thereby determining the disabling of the vital output of each of the voter units (1', 1, 1") if only one preceding voter unit(1', 1) detects a faulty condition in the output signal comparison fed to the respective voter unit (1' , 1, 1").

## Patentansprüche

1. Inhärente betriebssichere Freigabe-Steuer- und Befehlseinheit zur Erzeugung eines vitalen Freigabesignals für Voter- oder Betriebseinheiten, wobei die Freigabe-Steuer- und Befehlseinheit eine Zwei-aus-Zwei-Architektur aufweist, die eine logische Verarbeitungseinheit (2) mit zwei Verarbeitungskanälen aufweist, die unabhängig voneinander und parallel dasselbe Verarbeitungsprogramm an denselben Eingangsdaten ausführen und zwei Ausgangssignale (INPUT_DATI_Q_A und INPUT_DATI_Q_N_B) an eine Voter-Einheit (1) erzeugen, die einen Signalkomparator (120) zum Bestimmen der Kongruenz der beiden Ausgangssignale und einen Signalgenerator (140, 150) zur Freigabe des vitalen Freigabesignals, nur solange die beiden Signale (INPUT_DATA_Q_A und INPUT_DATA_Q_N_B) kongruent sind, aufweist, **dadurch gekennzeichnet, dass**
die Voter-Einheit (1) über Zeitsteuerungsmittel (140; 141) zum Messen der Häufigkeit von Ereignissen der Inkongruenz beim Vergleich der beiden Ausgangssignale und zum Sperren eines freigegebenen vitalen Freigabesignals nur für einen vorbestimmten und begrenzten Zeitraum verfügt, wenn es sich bei den Ereignissen der Inkongruenz um ein isoliertes Ereignis handelt oder die Häufigkeit der Inkongruenz unter einem bestimmten Schwellenwert ist.

2. Inhärente betriebssichere Steuer- und Befehlseinheit nach Anspruch 1, bei der die Ausgangssignale (INPUT_DATI_Q_A und INPUT_DATI_Q_N_B) digitale Signale sind und der Signalkomparator (120) der Voter-Einheit einen Bit-für-Bit-Vergleich der beiden Ausgangssignale unter Zählung der Anzahl von nicht kongruenten oder nicht komplementären und synchronen Bits in den beiden Signalen über einen bestimmten Zeitraum und/oder der Rate von nicht kongruenten Bits oder nicht komplementären und synchronen Bits relativ zur Gesamtzahl von verglichenen Bits ausführt, und jedes der Ereignisse von Nichtkongruenz die Voter-Einheit (1) dazu veranlasst, die vitale Ausgabe reversibel nur über einen bestimmten Zeitraum oder irreversibel dauerhaft, je nach Anzahl von nicht kongruenten Bits oder nicht komplementären und synchronen Bits in einem gewissen Zeitraum und/oder in der Rate von nicht kongruenten Bits oder nicht komplementären und synchronen Bits relativ zur Gesamtzahl von verglichenen Bits oder zur Zahl von kongruenten Bits oder komplementären und synchronen Bits, zu sperren.

3. Inhärente betriebssichere Steuer- und Befehlseinheit nach Anspruch 1 oder 2, wobei die Voter-Einheit (1) durch Initialisierungsmittel, die aus einer Voter-Leistungseinheit (3) bestehen, die von der logischen Verarbeitungseinheit (2) angetrieben wird, um ein Voter-Leistungssignal zu erzeugen, und durch eine Initialisierungsphase aktiviert wird, die einen Energiespeicher-Schritt aufweist, in dem die logische Verarbeitungseinheit (2) zwei Rechteckwellensignale (INPUT_FST_1_A und INPUT_FST_2_B) erzeugt und diese über einen bestimmten Zeitraum einem Startersignal-Generatorabschnitt (130) der Voter-Einheit (1) zuführt, wobei die Signale den Startersignal-Generatorabschnitt (130) antreiben, um ein Ladesignal zu erzeugen, das einer Speicherkapazität zugeführt wird, und wobei die Phase durch die Rückkopplungsstatussignale (VOTER_OUT_4 und VOTER_OUT_5) der Voter-Einheit (1), die der logischen Verarbeitungseinheit (2) zugeführt werden, ausgelöst wird, wobei die Energiespeicherphase für eine bestimmte begrenzte Zeit entsprechend der Kapazitätsladezeit ausgeführt wird, und wobei die Speicherkapazität ein Treiben der Zeitsteuerungsschaltung (140) zusammen mit der Signalkomparatoreinheit (120) zum Freigeben oder Sperren der vitalen Ausgabe der Voter-Einheit (1) antreibt, solange ein bestimmter Betrag der Ladung in der Speicherkapazität bereitgestellt wird.

4. Inhärente betriebssichere Steuer- und Befehlseinheit nach den Ansprüchen 1 bis 3, bei der die Signalkomparatoreinheit eine exklusive ODER-Schaltung (130) ist, die den bitweisen Vergleich der beiden digitalen oder digitalisierten Ausgangssignale (INPUT_DATI_Q_A und INPUT_DATI_Q_N_B) der logischen Verarbeitungseinheit (2) durchführt und einem Eingang einer Zeitsteuerungsschaltung (140) zuführt, die eine UND-Schaltung (141) mit vier Eingängen ist, wobei die UND-Schaltung ein Treibersignal (V_TEMP) erzeugt, das die vitale Signalausgabe der Voter-Einheit (1) freigibt, wenn an jedem der vier Eingänge die folgenden Signale jeweils mit einem bestimmten vorbestimmten Spannungswert um einen vorbestimmten Mindest-Spannungs-Schwellenwert anliegen:
ein Voter-Leistungssignal, das von der Voter-Stromversorgung (+12VF) erzeugt wird,
ein Voter-Rückkopplungssignal des Treibersignals der vitalen Freigabesignalausgabe (V_TEMP);
ein vitales Freigabe-Rückkopplungssignal (V-STICK), wenn sich der Voter in einem betriebsbereiten Zustand befindet und die vitale Ausgabe freigegeben ist oder ein Signal (12Vdc_starter), das von der Startereinheit (130) während der Energiespeicherphase erzeugt wird, eine Speicherkapazität lädt, die an eine RC-Schaltung und an einen der vier Eingänge der AND-Schaltung (141) angeschlossen ist;
das Ausgangssignal (IN2_8Vdc) der Signalkomparatoreinheit (120);
während im Fall einer Erkennung von nicht kongruenten oder nicht komplementären und synchronen Bits in den beiden verglichenen Ausgangssignalen das Ausgangssignal der Komparatoreinheit unter den Mindest-Spannungs-Schwellenwert fällt;
das vitale Freigabe-Rückkopplungssignal (V-STICK) auf null fällt, da die vitale Ausgabe des Voters gesperrt wird und der Kondensator beginnt, sich mit einer Zeitkonstante zu entladen, die durch die RC-Schaltung bestimmt wird, wobei diese Zeitkonstante die Zeit, während der die einem der Eingänge der UND-Schaltung (141) zugeführte Spannung über dem Mindest-Spannungs-Schwellenwert bleibt und der Sperrstatus der Voter-Einheit (1) reversibel ist, und die Zeit bestimmt, nach der der Sperrstatus der Voter-Einheit (1) dauerhaft wird, wenn der Vergleich der Signale (INPUT_DATI_Q_A und INPUT_DATI_Q_N_B) weiterhin nicht kongruente oder nicht komplementäre und synchrone Bits anzeigt, wobei die Spannung, die von der Speicherkapazität erzeugt wird, unter den Mindest-Spannungs-Schwellenwert fällt.

5. Inhärente betriebssichere Steuer- und Befehlseinheit nach einem oder mehreren der vorhergehenden Ansprüche 1 bis 4, bei der die Voter-Einheit (1) einen Voterstatus-Signalgenerator (VOTER_OUT_4 und VOTER_OUT_5) zum Antreiben eines Voter-Einheit-Leistungsmoduls (3; 130) zum Erzeugen eines Leistungssignals des Voters, solange das Voterstatussignal einem nicht fehlerhaften Status entspricht, aufweist.

6. Inhärente betriebssichere Steuer- und Befehlseinheit nach einem oder mehreren der vorhergehenden Ansprüche, bei der zwei oder mehr Voter-Einheiten (1', 1, 1") in einer Kaskadenverbindungskonfiguration verbunden sind, indem der vitale Freigabeausgang (201', 201) einer vorausgehenden Voter-Einheit (1'; 1) direkt oder durch eine Ausgabe-Anpassungseinheit an den Stromversorgungseingang einer nachfolgenden Voter-Einheit (1, 1") angeschlossen ist, wodurch das Sperren der vitalen Ausgabe von jeder der Voter-Einheiten (1', 1, 1") bestimmt wird, wenn nur eine vorausgehende Voter-Einheit (1', 1) einen fehlerhaften Zustand in dem der jeweiligen Voter-Einheit (1', 1, 1") zugeführten Ausgangssignal-Vergleich erkennt.

## Revendications

1. Unité de contrôle-commande à activation de sécurité intégrée inhérente pour générer un signal d'activation vitale pour des unités voteurs ou d'exploitation, l'unité de contrôle-commande à activation présentant une architecture deux sur deux, comprenant une unité de traitement logique (2) avec deux canaux de traitement exécutant d'une façon indépendante et en parallèle le même programme de traitement sur les mêmes données d'entrée et générant deux signaux de sortie (INPUT_DATI_Q_A et INPUT_DATI_Q_N_B) pour une unité voteur (1) comprenant un comparateur de signaux (120) conçu pour déterminer la congruence des deux signaux de sortie et un générateur de signaux (140, 150) conçu pour activer un signal de sortie vital seulement tant que les deux signaux (INPUT_DATI_Q_A et INPUT_DATI_Q_N_B) sont congruents, **caractérisée en ce que**
l'unité voteur (1) comporte des moyens temporisateurs (140 ; 141) pour mesurer la fréquence des événements de non-congruence dans la comparaison des deux signaux de sortie et pour désactiver un signal d'activation vital activé seulement pour un intervalle de temps limité et prédéterminé lorsque les événements de non-congruence sont un événement isolé ou la fréquence de ladite non-congruence est inférieure à un seuil donné.

2. Unité de contrôle-commande à activation de sécurité intégrée inhérente selon la revendication 1, dans laquelle les signaux de sortie (INPUT_DATI_Q_A et INPUT_DATI_Q_N_B) sont des signaux digitaux et le comparateur de signaux (120) de l'unité voteur effectue une comparaison bit à bit desdits deux signaux de sortie, en comptant le nombre de bits non-congruents ou non-complémentaires et synchrones dans les deux signaux dans un intervalle de temps donné et/ou le taux de bits non-congruents ou non-complémentaires et synchrones par rapport au nombre total de bits comparées, et chacun desdits événements de non-congruence commande à l'unité voteur (1) de désactiver la sortie vitale de manière réversible seulement pour un intervalle de temps donné, ou de manière irréversible et permanente, en fonction du nombre de bits non-congruents ou non-complémentaires et synchrones dans un intervalle de temps donné et/ou du taux de bits non-congruents ou non-complémentaires et synchrones par rapport au nombre total de bits comparés ou au nombre de bits congruents ou complémentaires et synchrones.

3. Unité de contrôle-commande à activation de sécurité intégrée inhérente selon la revendication 1 ou 2, dans laquelle l'unité voteur (1) est activée par des moyens d'initialisation, constitués d'une unité d'alimentation voteur (3) commandée par l'unité de traitement logique (2) pour la génération d'un signal d'alimentation voteur et par une phase d'initialisation comprenant une étape d'accumulation d'énergie dans laquelle l'unité de traitement logique (2) génère et alimente à une section de génération de signaux de démarrage (130) de l'unité voteur (1), pour un intervalle de temps donné, deux signaux carrés (INPUT_FST_1_A et INPUT_FST_2_B) qui commandent à ladite section de génération de signaux de démarrage (130) de générer un signal de chargement alimenté à un condensateur d'accumulation d'énergie, et laquelle phase est déclenchée par les signaux d'état de rétroaction (VOTER_OUT_4 et VOTER_OUT_5) de l'unité voteur (1) alimentés à l'unité de traitement logique (2), ladite phase d'accumulation d'énergie étant conduite pendant un intervalle de temps limité donné correspondant au temps de chargement du condensateur et ledit condensateur d'accumulation d'énergie alimentant une commande au circuit temporisateur (140) aussi bien qu'à l'unité comparateur de signaux (120) pour activer ou désactiver la sortie vitale de l'unité voteur (1) tant qu'une quantité donnée de charge est présente dans le condensateur d'accumulation d'énergie.

4. Unité de contrôle-commande à activation de sécurité intégrée inhérente selon les revendications 1 à 3, dans laquelle l'unité comparateur de signaux est un circuit OU exclusif (130), effectuant la comparaison bit à bit des deux signaux de sortie digitaux ou digitalisés (INPUT_DATI_Q_A et INPUT_DATI_Q_N_B) de l'unité de traitement logique (2) et alimentant une entrée d'un circuit temporisateur (140), qui est un circuit ET (141) à quatre entrées, ledit circuit ET générant un signal de commande (V_TEMP), activant la sortie de signaux vitaux de l'unité voteur (1), quand les signaux suivants sont présents respectivement avec une certaine valeur de tension prédéterminée autour d'un seuil de tension minimum prédéterminée, à chacune des quatre entrées :
un signal d'alimentation voteur généré par la source d'alimentation du voteur (+12VF) ;
un signal de rétroaction voteur du signal de commande de la sortie de signaux d'activation vitale (V_TEMP) ;
un signal de rétroaction d'activation vitale (V-STICK) quand le voteur est en état de fonctionnement et la sortie vitale est activée ou un signal (12Vdc_starter) généré par l'unité de démarrage (130) pendant la phase d'accumulation d'énergie charge un condensateur d'accumulation d'énergie connecté à un circuit RC et à l'une desdites quatre entrées du circuit ET (141) ;
le signal de sortie (IN2_8Vdc) de l'unité comparateur de signaux (120) ;
où, en cas de détection de bits non-congruents ou non-complémentaires et synchrones dans les deux signaux de sortie comparés, le signal de sortie de l'unité comparateur descend au-dessous du seuil de tension minimum ;
le signal de rétroaction d'activation vitale (V-STICK) descend à zéro dès que la sortie vitale du voteur est désactivée et le condensateur commence à se décharger avec une constante de temps définie par le circuit RC, ladite constante de temps déterminant le temps pendant lequel la tension alimentée à l'une des entrées du circuit ET (141) reste au-dessus du seuil de tension minimum et l'état de désactivation de l'unité voteur (1) est réversible, et le temps après lequel l'état de désactivation de l'unité voteur (1) devient permanent si la comparaison des signaux (INPUT_DATI_Q_A et INPUT_DATI_Q_N_B) continue à révéler des bits non congruents ou non complémentaires et synchrones, la tension générée par le condensateur d'accumulation d'énergie descendant au-dessous du seuil de tension minimum.

5. Unité de contrôle-commande à activation de sécurité intégrée inhérente selon l'une ou plusieurs des revendications 1 à 4, dans laquelle ladite unité voteur (1) comprend un générateur de signaux d'état voteur (VOTER_OUT_4 et VOTER_OUT_5) pour commander à un module d'alimentation d'unité voteur (3 ; 130) de générer un signal d'alimentation du voteur tant que le signal d'état du voteur correspond à un état non-défectueux.

6. Unité de contrôle-commande à activation de sécurité intégrée inhérente selon l'une ou plusieurs des revendications précédentes, dans laquelle deux ou plusieurs unités voteurs (1', 1, 1") sont connectées en cascade par connexion de la sortie d'activation vitale (201', 201) d'une unité voteur précédente (1' ; 1) directement ou avec l'interposition d'une unité d'adaptation de sorties à l'entrée d'alimentation d'une unité voteur suivante (1, 1"), déterminant ainsi la désactivation de la sortie vitale de chacune des unités voteurs (1', 1, 1") si seulement une unité voteur précédente (1', 1) détecte une condition défectueuse dans la comparaison de signaux de sortie alimentée à l'unité voteur respective (1', 1, 1") .
